# FASCICULE DE BREVET EUROPEEN

(11) **EP 3 601 860 B1**
(45) Date de publication et mention de la délivrance du brevet: **09.02.2022**
(21) Numéro de dépôt: 18711585.2
(22) Date de dépôt: 23.03.2018
(51) Int. Cl.: F16L 5/02, F16L 5/04, F16L 5/06, F16L 5/10, H02G 3/22

(54) **PRESSE-ETOUPE DE TRAVERSEE ETANCHE D'UN ORIFICE D'UNE CLOISON**
STOPFBUCHSE FÜR EINE ABGEDICHTETE DURCHFÜHRUNG EINER ÖFFNUNG EINER TRENNWAND
GLAND FOR A SEALED FEEDTHROUGH OF AN ORIFICE OF A PARTITION

(30) Priorité: 24.03.2017 FR 1700310
(43) Date de publication de la demande: 05.02.2020
(73) Titulaire: Naval Energies, 75015 Paris (FR)
(72) Inventeur: PRISER, Mathieu, 75015 Paris (FR); PEROU, Jean-Yves, 75015 Paris (FR)
(74) Mandataire: Lavoix
(86) Numéro de dépôt international: PCT/EP2018/057447
(87) Numéro de publication internationale: WO 2018/172524

(56) Documents cités:
- DE-U1-202009 004 739
- FR-A2- 2 593 578
- US-A- 2 936 187
- US-A1- 2014 291 937

## Description

La présente invention concerne un presse-étoupe de traversée étanche d'une cloison.

Plus particulièrement, l'invention se rapporte à un presse-étoupe de traversée étanche d'une cloison, par un composant filiforme tel que notamment un câble électrique ou autre.

On trouvera un exemple de réalisation d'un tel presse-étoupe dans le document DE 20 2009 004 739 U.

Des composants autres que des câbles électriques, peuvent bien entendu être envisagés, comme par exemple des fibres optiques, des conduites hydrauliques, de gaz,...

On sait que ces composants filiformes, comme par exemple des câbles, peuvent présenter des défauts géométriques de forme importants, ce qui rend difficile l'obtention d'une bonne étanchéité de la traversée.

On peut également essayer d'assurer l'étanchéité d'une telle traversée, en réalisant un joint surmoulé autour du câble.

Mais cette technique de surmoulage est délicate à la mise en oeuvre (surmoulage thermoplastique à chaud) et difficile à déployer sur chantier extérieur.

Par ailleurs, un tel surmoulage se traduit par un coût non négligeable.

De plus, un tel surmoulage n'est pas démontable et ne permet pas d'ajuster la position du câble et de ces moyens d'étanchéité par rapport à la traversée.

On sait qu'il existe déjà dans l'état de la technique, des presse-étoupes de traversée étanche de tels orifices, qui comprennent un corps de presse-étoupe de passage du composant, ce corps étant fixé de manière étanche sur la cloison ou pièce à traverser au regard de l'orifice.

Des moyens d'étanchéité en forme de manchon déformable, sont placés dans un logement correspondant du corps du presse-étoupe, autour par exemple du composant filiforme

Une pièce formant refouloir pour comprimer les moyens d'étanchéité en forme de manchon déformable, sont également prévus, en association avec ce corps de presse-étoupe, pour comprimer et déformer ces moyens d'étanchéité dans le logement du corps du presse-étoupe, contre le composant filiforme afin d'assurer l'étanchéité entre ce corps de presse-étoupe et le composant filiforme.

Différents modes de réalisation de ces moyens d'étanchéité ont déjà été proposés dans l'état de la technique.

Mais aucun de ceux-ci n'a donné pleinement satisfaction, notamment au niveau de la prise en compte des défauts du composant filiforme et en particulier d'un câble électrique.

Le but de l'invention est donc de résoudre ces problèmes.

A cet effet l'invention a pour objet un presse-étoupe de traversée étanche d'une cloison, par un composant filiforme tel que notamment un câble électrique, du type comportant :
- un corps de presse-étoupe de passage du composant, fixé de manière étanche sur la cloison à traverser en regard de l'orifice,
- des moyens d'étanchéité en forme de manchon déformable, placés dans un logement correspondant du corps de presse-étoupe, autour du composant, et
- un composant formant refouloir pour comprimer les moyens d'étanchéité en forme de manchon déformable et les déformer dans le logement du corps de presse-étoupe contre le composant filiforme, afin d'assurer l'étanchéité entre le corps de presse-étoupe et le composant filiforme, caractérisé en ce que les moyens d'étanchéité en forme de manchon déformable se présentent sous la forme d'un empilement de joints annulaires de section de forme générale en V, montés tête-bêche les uns à la suite des autres.

Suivant d'autres caractéristiques du presse-étoupe selon l'invention, prises seules ou en combinaison :
- les joints annulaires sont réalisés en élastomère ;
- le corps de presse-étoupe est fixé sur la cloison munie de l'orifice par des moyens de vissage et il est prévu des joints toriques d'étanchéité entre ce corps et cette cloison;
- l'organe en forme de refouloir présente une partie s'engageant dans le logement du corps de presse-étoupe pour comprimer les moyens d'étanchéité et une autre partie en forme de collerette associée à des moyens de vissage sur le corps pour solliciter celui-ci dans ce corps ;
- les moyens de vissage comprennent des vis régulièrement réparties autour du corps ;
- le composant en forme de refouloir est vissé directement dans le logement du corps de presse-étoupe étoupe pour comprimer les moyens d'étanchéité.

L'invention sera mieux comprise à la lecture de la description qui va suivre, donnée uniquement à titre d'exemple et faite en se référant aux dessins annexés, sur lesquels :
- la figure 1 représente une vue en coupe d'un exemple de réalisation d'un presse-étoupe de traversée selon l'invention ; et
- les figures 2 et 3 représentent respectivement des vues en perspective et en coupe d'un joint annulaire entrant dans la constitution d'un presse-étoupe de traversée selon l'invention.

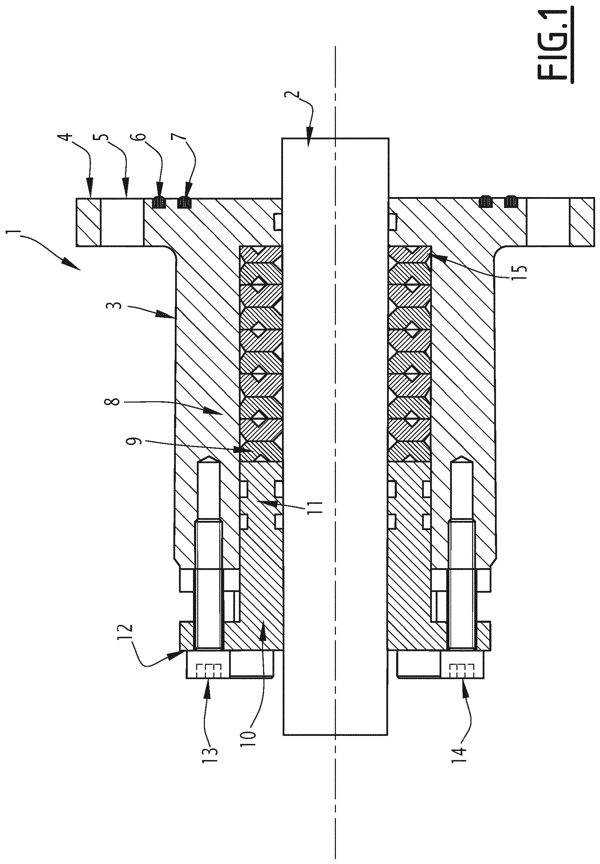

On a en effet illustré sur ces figures et en particulier sur la figure 1, un presse-étoupe de traversée étanche d'un orifice.

Sur cette figure 1, le presse-étoupe est désigné par la référence générale 1, et assure donc une traversée étanche d'un orifice d'une cloison ou pièce quelconque, par un composant filiforme tel que notamment un câble électrique, désigné par la référence générale 2 sur cette figure 1.

Celui-ci peut présenter des défauts d'aspect relativement importants.

De façon classique, ce presse-étoupe comporte un corps de presse-étoupe de passage du composant filiforme, désigné par la référence générale 3, et fixé de manière étanche sur la cloison ou pièce à traverser, en regard de l'orifice.

En fait et comme cela est illustré, ce corps de presse-étoupe 3 comporte par exemple une collerette périphérique externe, désignée par la référence générale 4, munie de trous 5 de passage de vis de fixation de ce corps sur la cloison ou pièce.

De plus des joints toriques d'étanchéité par exemple 6 et 7, sont interposés entre le corps et la cloison et permettent d'assurer l'étanchéité entre ce corps de presse-étoupe et cette cloison.

Ce corps de presse-étoupe comporte également un logement interne 8, dans lequel sont placés des moyens d'étanchéité en forme de manchon déformable, désignés par la référence générale 9 sur cette figure1, ces moyens d'étanchéité étant donc placés dans le logement du corps, autour du câble 2.

Enfin, le presse-étoupe comporte également un composant ou organe formant refouloir désigné par la référence générale 10 sur cette figure 1, pour comprimer les moyens d'étanchéité en forme de manchon déformable et les déformer dans le logement correspondant 8 du corps de presse-étoupe, contre l'organe allongé et donc le câble 2, afin d'assurer l'étanchéité entre ce corps de presse-étoupe et le composant filiforme tel que le câble.

Ainsi, cet organe en forme de refouloir 10 comporte une partie 11 s'engageant dans le logement 8 du corps de presse-étoupe, pour venir en appui et donc pour comprimer les moyens d'étanchéité 9 et une autre partie 12 en forme de collerette, par exemple associée à des moyens de vissage et de serrage de cet organe en forme de refouloir sur le corps pour solliciter celui-ci dans ce corps.

Comme cela est illustré, ces moyens de vissage comprennent par exemple des vis désignées par les références 13 et 14 sur cette figure 1, ces vis étant régulièrement réparties autour du corps.

Bien entendu d'autres modes de réalisation peuvent être envisagés.

Ainsi par exemple le composant en forme de refouloir peut également comporter une partie filetée s'engageant dans une partie taraudée du logement du corps de presse-étoupe étoupe pour comprimer les moyens d'étanchéité.

Le composant est alors vissé dans le corps directement pour comprimer les moyens d'étanchéité.

Ceci permet en particulier de réduire sensiblement le diamètre du presse-étoupe.

Selon l'invention, les moyens d'étanchéité 9 en forme de manchon déformable, placés autour du câble, se présentent sous la forme d'un empilement de joints annulaires.

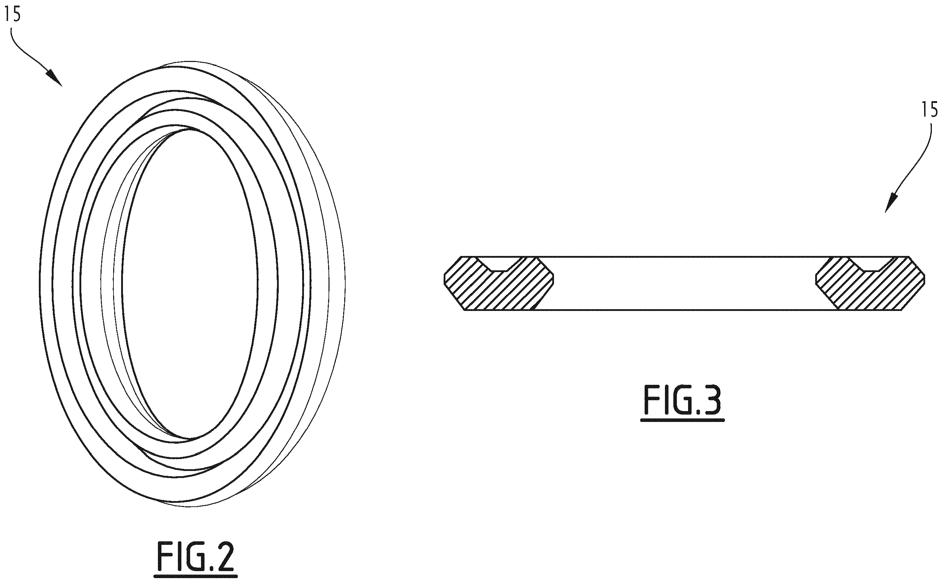

L'un de ces joints est désigné par la référence générale 15 sur la figure 1, et est représenté plus en détail sur les figures 2 et 3.

En fait, ces joints annulaires peuvent par exemple présenter une section de forme générale en V ou en X et peuvent être montés tête-bêche les uns à la suite des autres, pour former un empilement de joints en quinconce.

Ces joints peuvent réalisés en élastomère et peuvent être obtenu par usinage ce qui permet d'obtenir une meilleure précision que pour un joint moulé.

Une telle structure permet d'obtenir une très bonne étanchéité au niveau du câble, un taux de compression appliqué, se situant entre 15 et 25%, et par exemple à 20%, pouvant par exemple être souhaité.

Bien entendu la dureté de chaque joint peut être sélectionnée de manière à assurer une bonne déformabilité de ce joint sous la charge de compression.

Ceci permet d'obtenir une conformation de ces joints aux défauts de forme du composant filiforme et en particulier du câble.

Bien entendu d'autres modes de réalisation encore peuvent être envisagés dans le cadre de l'invention qui reste défini par les revendications.

## Revendications

1. Presse-étoupe de traversée étanche d'un orifice d'une cloison par un composant filiforme tel que notamment un câble électrique (2), du type comportant :
- un corps (3) de presse-étoupe de passage du composant filiforme, fixé de manière étanche sur la cloison à traverser en regard de l'orifice,
- des moyens (9) d'étanchéité en forme de manchon déformable, placés dans un logement correspondant (8) du corps de presse-étoupe (3), autour du composant (2), et
- un composant (10) formant refouloir pour comprimer les moyens d'étanchéité en forme de manchon déformable (9) et les déformer dans le logement (8) du corps de presse-étoupe contre le composant filiforme (2), afin d'assurer l'étanchéité entre le corps de presse-étoupe et le composant filiforme, **caractérisé en ce que** les moyens d'étanchéité en forme de manchon déformable (9) se présentent sous la forme d'un empilement de joints annulaires (15) de section de forme générale en V, montés tête-bêche les uns à la suite des autres .

2. Presse-étoupe selon la revendication 1, **caractérisé en ce que** les joints annulaires (15) sont réalisés en élastomère.

3. Presse-étoupe selon l'une quelconque des revendications précédentes, **caractérisé en ce que** le corps de presse-étoupe (3) est fixé sur la cloison munie de l'orifice par des moyens de vissage (4, 5) et **en ce qu'**il est prévu des joints toriques d'étanchéité (6, 7) entre ce corps et cette cloison.

4. Presse-étoupe selon l'une quelconque des revendications précédentes, **caractérisé en ce que** le composant en forme de refouloir (10) présente une partie (11) s'engageant dans le logement (8) du corps de presse-étoupe pour comprimer les moyens d'étanchéité (9) et une autre partie en forme de collerette (12) associée à des moyens de vissage (13, 14) sur le corps pour solliciter celui-ci dans ce corps.

5. Presse-étoupe selon la revendication 4, **caractérisé en ce que** les moyens de vissage comprennent des vis (13, 14) régulièrement réparties autour du corps.

6. Presse-étoupe selon l'une quelconque des revendications 1 à 3, **caractérisé en ce que** le composant en forme de refouloir est vissé directement dans le logement du corps de presse-étoupe étoupe pour comprimer les moyens d'étanchéité.

## Patentansprüche

1. Stopfbuchse zum abgedichteten Durchführen einer Öffnung einer Trennwand durch eine drahtförmige Komponente, wie insbesondere eines elektrischen Kabels (2), eines Typs, der Folgendes umfasst
- einen Körper (3) einer Stopfbuchse zum Durchführen der drahtförmigen Komponente, die abdichtend an der zu durchdringenden Trennwand in Bezug auf die Öffnung befestigt ist,
- ein Einrichtungen (9) zum Abdichten in Form einer verformbaren Hülse, das in einer entsprechenden Aufnahme (8) des Stopfbuchsenkörpers (3) um die Komponente (2) herum angeordnet ist, und
- eine Komponente (10), die ein Setzstück bildet, um die Dichtungseinrichtungen in Form einer verformbaren Hülse (9) zu komprimieren und sie in der Aufnahme (8) des Stopfbuchsenkörpers gegen die drahtförmige Komponente (2) zu verformen, um die Abdichtung zwischen dem Stopfbuchsenkörper und der drahtförmigen Komponente zu gewährleisten, **dadurch gekennzeichnet, dass** die Dichtungseinrichtungen in Form einer verformbaren Hülse (9) in Form eines Stapels von ringförmigen Dichtungen (15) mit einem generell V-förmigen Querschnitt vorliegen, die Kopf an Kopf hintereinander montiert sind.

2. Stopfbuchse nach Anspruch 1, **dadurch gekennzeichnet, dass** die ringförmigen Dichtungen (15) aus Elastomer bestehen.

3. Stopfbuchse nach einem der vorherigen Ansprüche, **dadurch gekennzeichnet, dass** der Stopfbuchsenkörper (3) an der mit der Öffnung versehenen Trennwand durch Verschraubungseinrichtungen (4, 5) befestigt ist und dass zwischen diesem Körper und dieser Trennwand O-Ring-Dichtungen (6, 7) bereitgestellt sind.

4. Stopfbuchse nach einem der vorherigen Ansprüche, **dadurch gekennzeichnet, dass** die setzstückförmige Komponente (10) einen Abschnitt (11) aufweist, der in die Aufnahme (8) des Stopfbuchsenkörpers eingreift, um die Dichtungseinrichtungen (9) zu komprimieren, und einen anderen Abschnitt in Form eines Bunds (12) aufweist, der mit Schraubeinrichtungen (13, 14) am Körper assoziiert ist, um diese in diesem Körper vorzuspannen.

5. Stopfbuchse nach Anspruch 4, **dadurch gekennzeichnet, dass** die Verschraubungseinrichtungen Schrauben (13, 14) umfassen, die gleichförmig um den Körper verteilt sind.

6. Stopfbuchse nach einem der Ansprüche 1 bis 3, **dadurch gekennzeichnet, dass** die setzstückförmige Komponente direkt in die Aufnahme des Stopfbuchsenkörpers geschraubt wird, um die Dichtungseinrichtungen zu komprimieren.

## Claims

1. A gland for sealed feedthrough of a partition, using a filiform component in particular such as an electric cable (2), of the type including:
- a gland body (3) for the passage of the component, sealingly fixed to the partition to be passed through opposite the orifice;
- sealing means (9) in the form of a deformable sleeve, placed in a corresponding housing (8) of the gland body (3), around the component (2); and
- a component (10) forming a reamer for compressing the sealing means in the form of a deformable sleeve (9) and deforming them in the housing (8) of the gland body against the filiform component (2), so as to provide the seal between the gland body and the filiform component, **characterized in that** the sealing means in the form of a deformable sleeve (9) are in the form of a stack of annular seals (15) having a general V- shaped section, mounted head to tail one after the other.

2. The gland according to claim 1 **characterized in that** the annular seals (15) are made from elastomer.

3. The gland according to any one of the preceding claims, **characterized in that** the gland body (3) is fixed on the partition provided with the orifice by screwing means (4, 5) and it is provided with sealing O-rings (6, 7) between this body and this partition.

4. The gland according to any one of the preceding claims, **characterized in that** the reamer component (10) has a part (11) engaging in the housing (8) of the gland body to compress the sealing means (9) and another part in collar form (12) associated with screwing means (13, 14) on the body to urge the latter in this body.

5. The gland according to claim 4, **characterized in that** the screwing means comprise screws (13, 14) regularly distributed around the body.

6. The gland according to any one of claims 1 to 3, **characterized in that** the component in reamer form is screwed directly in the housing of the gland body to compress the sealing means.
